# EUROPEAN PATENT SPECIFICATION

(11) **EP 1 028 025 B1**
(45) Date of publication and mention of the grant of the patent: **13.06.2007**
(21) Application number: 00102200.3
(22) Date of filing: 10.02.2000
(51) Int. Cl.: B60Q 1/115

(54) **Optical axis adjustment mechanism for an automobile headlight**
Einrichtung zur Einstellung der optischen Achse eines Fahrzeugscheinwerfers
Dispositif d'ajustement de l'axe optique d'un phare de véhicule

(30) Priority: 10.02.1999 JP 3297399
(43) Date of publication of application: 16.08.2000
(73) Proprietor: Stanley Electric Co., Ltd., Meguro-ku Tokyo 153-8636 (JP)
(72) Inventor: Tanabe, Toru, Yokohama-shi, Kanagawa-ken 225-0014 (JP); Kitamura, Hideki, Yokohama-shi, Kanagawa-ken 225-0014 (JP); Seki, Hirokazu, Yokohama-shi, Kanagawa-ken 225-0014 (JP)
(74) Representative: Geyer, Ulrich F.

(56) References cited:
- EP-A- 0 355 539
- EP-A- 0 470 408
- DE-A- 19 628 405
- PATENT ABSTRACTS OF JAPAN vol. 1998, no. 12, 31 October 1998 (1998-10-31) & JP 10 181426 A (ICHIKOH IND LTD), 7 July 1998 (1998-07-07)
- PATENT ABSTRACTS OF JAPAN vol. 1998, no. 12, 31 October 1998 (1998-10-31) & JP 10 181428 A (ICHIKOH IND LTD), 7 July 1998 (1998-07-07)

## Description

### BACKGROUND OF THE INVENTION

### Field of the Invention

The present invention relates to a mechanism of optical axis direction adjustment for an automobile headlight, in particular to a mechanism for automatically adjusting the angular relationship in vertical direction between the optical axis of the headlight and a horizontal line passing through a light source of said headlight depending on the angle of the automobile body in a front-back direction relative to a horizontal line while the automobile is moving.

### Discussion of the Related Art

It often happens that the automobile body is not parallel to the road surface when a heavy load is applied on the backside of the automobile body by a significant amount of luggage or people. In such cases, the optical axis, in other words, the illuminating direction of the headlight, is inclined relative to a horizontal line in the front-back direction. In principle, the optical axis of an automobile headlight must be parallel to the road surface at any time while driving. It is required for an automobile to have a mechanism for adjusting an optical axis direction of an automobile headlight depending on an angle between the optical axis and the horizontal line passing through the light source of the automobile headlight. A conventional optical axis adjustment mechanism comprises the steps of detecting an angle of the automobile body relative to a horizontal line when the automobile is motionless, and adjusting the optical axis direction of the headlight in depending on the detected angle of inclination of the automobile body.

The conventional optical axis adjustment mechanism has the following problems. The adjustment of the optical axis angle is performed based upon an automobile body condition when the automobile is motionless i.e. before the automobile begins to move. While it is possible to account for variable weight conditions applied to an automobile body, it is impossible to adjust optical axis direction based upon variable driving conditions such as acceleration, deceleration, or varying position of the automobile body depending on the road conditions. It is also impossible to have an optimal illuminating direction of the automobile headlight in a stable driving state, i.e. neither accelerating nor decelerating. This is the case when the automobile starts to move in the middle of a steep slope or starts to move from a state in which the front and/or back tire is positioned on a curb.

Further attention is drawn to the document JP10181426A, which relates to an accurate optical axis adjustment by controlling the angle of an optical axis corresponding to an angle of inclination of a car body, which is calculated from the detection of the displacement of the front and rear parts of a car body from the road surface and car speed at a point of time when the change of car speed is more than a preset value within a preset time during running. Therefore, a microcomputer inputs a signal of a car speed detecting part and detection results obtained by emitting ultrasonic waves toward the road surface by car body front and rear part displacement detecting parts in a fixed cycle and outputs a signal for setting the angle of optical axis of headlights corresponding to the angles of inclination of a car body calculated. As a result of the control for the optical axis corresponding to the angle of inclination of a car body calculated according to the respective detection signal of the car body displacement detecting parts at a point of time when the car speed changes more than a preset value, for example, 4km/h within a preset time, for example, within 0.3sec during running, even if the angle of inclination of the car body is changed by sudden acceleration/sudden deceleration of an automobile, dazzlement to a car on the opposite lane and lowering of visual range are eliminated by the optical axis angle control for the head light to enable accurate optical axis adjustment.

Furthermore attention is drawn to the document JP10181428A, which also relates to an accurate adjustment by controlling the angle of an optical axis corresponding to an angle of inclination of a car body, which is calculated from the displacement of the front and rear parts of a car body from the road surface and car speed at a point of time when the change of car speed within a first present time is less than a preset value and the value of an angle of inclination of the car body different from the angle of inclination in a memory continues for a second present time during running. Therefore, ultrasonic waves are emitted from the car body front and rear part displacement detecting parts toward the road surface, and according to the detection signals and a car speed, a microcomputer calculates the angle of inclination of a car body to set and control the angles of the optical axes of headlights. During running, the microcomputer can control the optical axis angle of a headlight corresponding to the angle of inclination if the angle of inclination of a car body changes during slope running as a result of outputting an optical axis setting signal to the angle of inclination when the value of angle of inclination of the car body different from the angle of inclination in a memory continues for a preset time in the condition where the preset value is 4km/h or less within a first present time, for example, within 0.3sec., whereby there is no possibility of dazzlement to a car on the opposite lane and lowering of visual range to enable accurate optical axis adjustment.

Furthermore attention is drawn to the document EP-A-0 355 539, which relates to a method for controlling the lighting distance or the level of a vehicle, in particular of a motor vehicle, in which a differential signal consisting of signals from the front and rear axle of a vehicle is formed, said signals depending on the relative position of the vehicle body in respect of the front and rear axle, in which method the differential signal is filtered by the formation of an average value and in which actuating elements corresponding to the filtered differential signal are aimed at, in order to permit control of the lighting distance or of the level of a vehicle adapted to the operating time and the respective different operating modes, the specified timing interval and the time over which averaging occurs is determined by a predetermined, changeable filter timing constant and, with increasing operating time, the filter timing constant is increased from relatively short times to relatively long times after a start or a switching on of the lighting system or a change of the operating mode of the vehicle.

Furthermore attention is drawn to the document EP-A-0 470 408, which relates to a method and a device for controlling the lightbeam of a motor vehicle, in which signals are measured at one point of the front axle and at one point of the rear axle, said signals being dependent on the position of the vehicle body relative to the front axle and to the rear axle, in which a formation of differentials of the signals of the front axle and of the rear axle is carried out, in which the resulting differential signals are filtered as reference value signals by averaging and in which the position of actuation elements is controlled if the filtered reference value signal deviates from a previously entered or preset value, in order to provide a control of the lightbeam for motor vehicles, in which control unevennesses in the carriageway are to be filtered out to the best possible degree and in a simple and cost-effective manner during the formation of differentials of the signals from a front axle signal generator and a rear axle signal generator, and the signal from the front axle is not fed to the formation of the differentials until a delay time has expired, the delay time depends on the quotient formed from the axial spacing between the front axle and the rear axle and the travelling speed and the reference value signal is formed by forming the differential between the signal from the rear axle and the delayed signal from the front axle.

Each of the aforementioned documents comprises the features of the preamble of claim 1.

### SUMMARY OF THE INVENTION

The present invention is directed to an optical axis direction adjustment mechanism of an automobile headlight that substantially obviates one or more of the above problems which are due to the limitations and disadvantages of the related art.

An object of the invention is to provide an optical axis direction adjustment mechanism for an automobile headlight capable of providing the headlight with an optimal light illuminating direction in any circumstances regardless of road surface or weight condition when the automobile is motionless, i.e. before the automobile begins to move, by adjusting an angle of the optical axis of the headlight relative to a horizontal line passing through a light source of the headlight while the automobile is moving.

In accordance with the present invention an optical axis angle adjustment mechanism relative to a horizontal line passing through a light source for an automobile headlight, as set forth in claim 1, is provided. Embodiments of the present invention are claimed in the dependent claims.

The above object is achieved by providing an optical axis direction adjustment mechanism for an automobile headlight comprising a speed detector for detecting speed while the automobile is moving, an automobile body angle detector for detecting an angle of the automobile body relative to a horizontal line in the front-back direction, and a driving unit for adjusting an optical axis direction of the headlight depending on results from the speed detector and the automobile body angle detector. The mechanism further comprises a control unit for performing arithmetic operations to obtain the amount the optical axis needs to be moved, and for outputting into the driving unit a control signal, that corresponds to the amount the optical axis needs to be moved. The driving unit is able to move the direction of the optical axis of the headlight after a predetermined time period has passed since the input of the control signal.

In the mechanism, when the speed of the automobile and the automobile body angle are less than a predetermined value, the optical axis direction of the headlight is not adjusted. The optical axis direction of the headlight is adjusted only when the driving speed is above a predetermined value and also when the driving speed and the detected inclined angle of the automobile body are changing within a predetermined range after a predetermined time period has passed since the start of motion.

Additional objects and advantages of the invention will be set forth in part in the description which follows, and will in part be obvious from the description, or may be learned by practice in the use of the invention. The objects and advantages of the invention will be realized and attained by means of the elements and combinations particularly pointed out in the appended claims.

It is to be understood that both the foregoing general description and the following detailed description are exemplary and are intended to provide further explanation of the invention as claimed.

### BRIEF DESCRIPTION OF THE DRAWINGS

The accompanying drawings, which are incorporated in and constitute a part of this specification, illustrate several embodiments of the invention and, together with the description, serve to explain the principles of the invention.
Fig. 1 is a diagram showing a basic configuration of a preferred embodiment of the present invention.
Fig. 2 illustrates a timing chart for operation of an optical axis direction adjustment according to the preferred embodiment of the present invention.
Fig. 3 is a flow chart illustrating a series of arithmetic operations of the preferred embodiment of the present invention.

### DETAILED DESCRIPTION OF THE PREFERRED EMBODIMENTS

Reference will now be made in detail to the preferred embodiments of the present invention. Whenever possible, the same reference numbers will be used throughout the drawings to refer to the same or like parts.

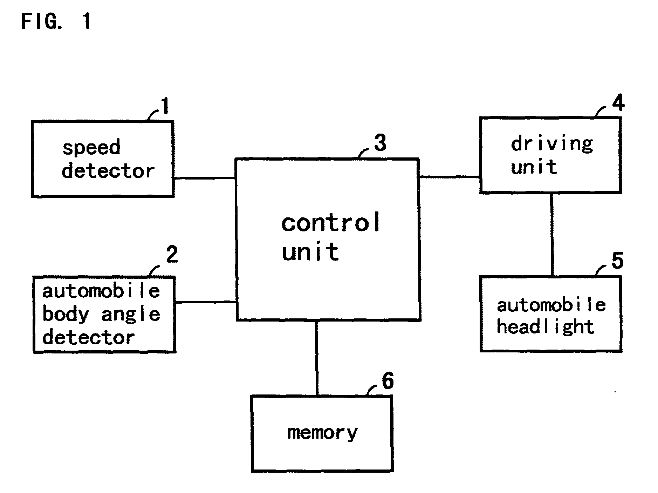

Fig. 1 is a diagram illustrating basic configurations of an optical axis direction adjustment mechanism according to a preferred embodiment of the present invention. The optical axis direction adjustment mechanism comprises a speed detector 1 for detecting the driving speed of the automobile, an automobile body angle detector 2 for detecting the automobile body angle in a front-back direction relative to a horizontal line, a control unit 3 such as CPU, ROM, or RAM, a driving unit 4 for performing an adjustment of the optical axis direction corresponding to the signal output from the control unit 3, an automobile headlight 5 the optical axis of which is driven by the driving unit 4, and a memory 6 connected to the control unit 3 for storing various data and parameters for adjusting the optical axis direction of the automobile headlight 5. In the automobile body angle detector 2, the automobile body angle is obtained by arithmetic operations based on information about the position and distance of the front and back tires. The control unit 3 performs arithmetic operations of the driving speed of the automobile and average angle of the automobile body every predetermined time period. The signal output from the control unit 3 is based upon the results of the arithmetic operations, which are in turn based on the output form the automobile speed detector 1 and the automobile body angle detector 2.

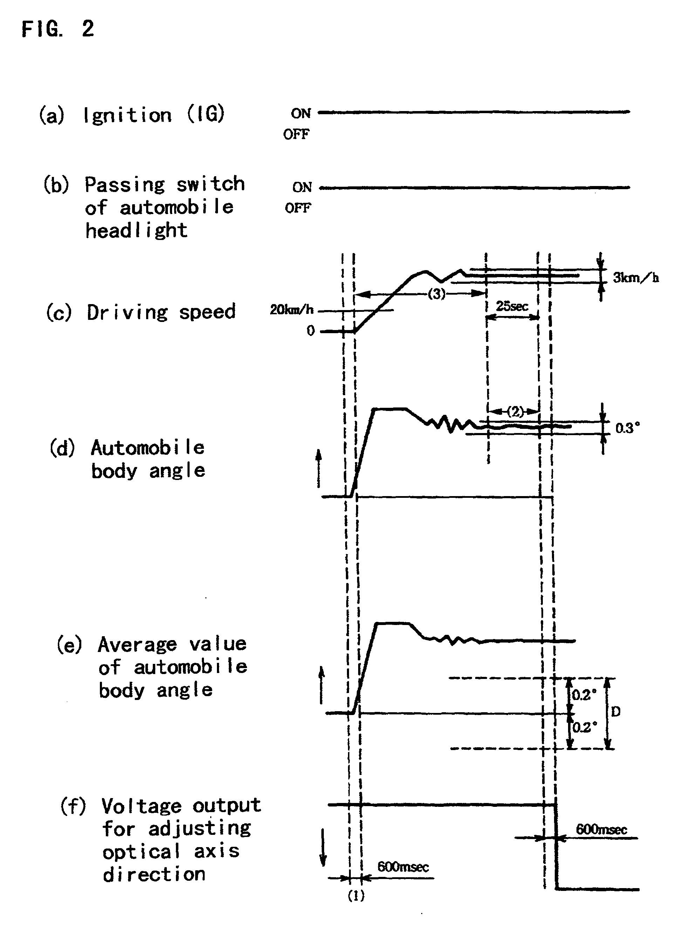

Fig. 2 illustrates a timing chart of an optical axis direction adjustment. The timing of the optical axis direction adjustment is determined by parameters (a) to (f). Fig. 2 illustrates a predetermined time period from the start of motion of the automobile to a certain time point in a stable driving state. An on-off signal of an ignition switch (IG) is shown in (a). An on-off signal of a passing switch of the headlight 5 is shown in (b). When the passing switch is on, light distribution of the headlight is in passing-by mode (low beam mode). Driving speed of the automobile is shown in (c) as a signal output from the speed detector 1 . The automobile body angle in the front-back direction relative to the horizontal line is shown in (d) as a signal output from the automobile body angle detector 2, and an average value of the automobile body angle at every predetermined time period is shown in (e). A voltage output applied to the headlight 5 for adjusting the optical axis direction is shown in (f). The voltage output in (f) is different from the voltage output based upon the signal from the passing switch for changing the light distribution pattern of the automobile headlight between travelling (high-beam) mode and passing-by (low-beam) mode.

When the automobile starts to move, a velocity pulse corresponding to the actual speed of the automobile from a sensor is inputted into the speed detector 1. However, for a predetermined time period (1) e.g. 600msec in which the velocity pulse is inputted just before the automobile starts to move, although a shift of values in automobile body angle (d) and its average (e) is detected, the voltage output (f) applied to the headlight for optical axis adjustment should not change.

The optical axis angle adjustment relative to a horizontal line passing through a light source of a headlight is performed by applying a varying voltage (f) for the optical axis adjustment through the driving unit 4 when a driving state satisfying all the following conditions continues for 600msec. The driving speed is greater than 20km/h. The shift in driving speed is in a range less than 3km/h. The automobile body angle relative to a horizontal line changes in a range less than 0.3 degree after the velocity pulse is inputted in the speed detector 1, and such a state continues for preferably 25 seconds. The average value of the automobile body angle relative to a horizontal line taken every predetermined time period, falls in a predetermined range D, e.g. greater than 0.2 degree or less than -0.2 degree. As shown in (c) (3), when a velocity pulse enters into the speed detector 1 without satisfying all conditions in the above related to the automobile body angle and time periods, the applied voltage (f) for the lamp axis or optical axis direction adjustment does not shift.

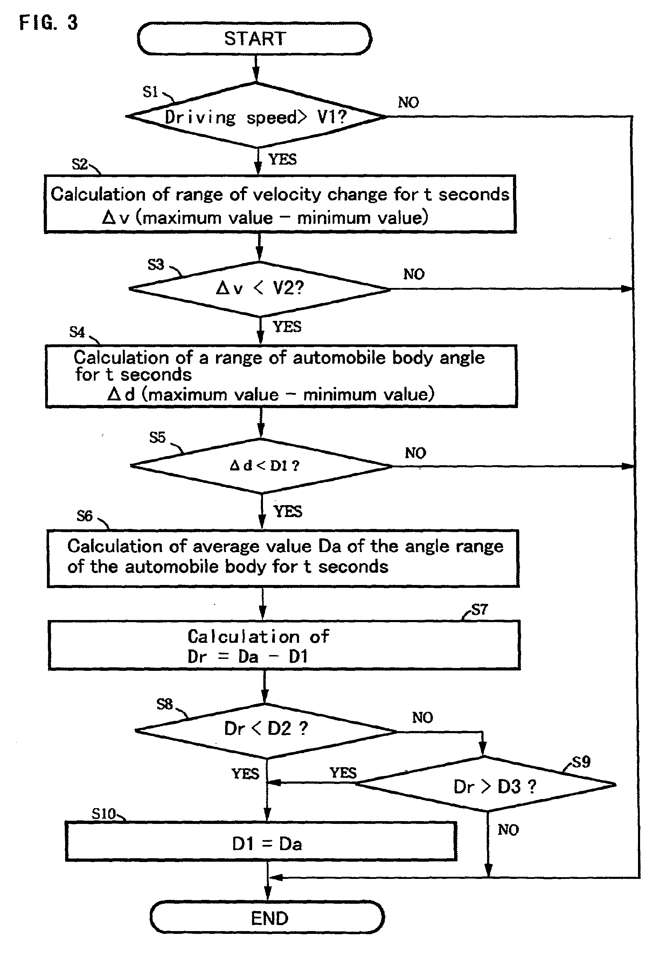

Fig. 3 illustrates a flow chart of arithmetic operations performed by the control unit 3 e.g. a CPU in accordance with a program stored in the memory 6 e.g. ROM. After the automobile finishes acceleration in the beginning of driving and enters into a stable driving state, it is observed in the step S 1 whether or not the automobile speed exceeds a predetermined value V1. When the detected speed of the automobile is equal to or smaller than a predetermined value V1, optical axis direction of an automobile headlight is remained as it is. When the detected speed of the automobile is greater than a predetermined value, the arithmetic operation moves to step S2. In step S2, a range of velocity change Δv (maximum value -minimum value) for a predetermined time period of t seconds is calculated. In step 3, when the range of velocity change Δv is equal to or larger than a predetermined value v2 (Δv≥v2) i.e. the automobile is in the state of acceleration or deceleration, the optical axis direction remains as it is. When the range of velocity change Δv is less than a predetermined value (Δv<v2), a range of angle change Δd (maximum value - minimum value) of an automobile body in a front-back direction relative to a horizontal line for a predetermined time period of t seconds is calculated in the step S4. In the fifth step S5, when the range of angle change Δd of the automobile body is equal to or greater than a predetermined value D1 (Δd ≥ D1) i.e. temporary change of road conditions, the optical axis direction is maintained as it is. Alternatively, when the range of angle change Δd of the automobile body is less than the predetermined value Dl (Δd ≥ D1), the average value Da of the angle range of the automobile body for the t seconds is calculated in step S6. In step S7, Dr (=Da-Dl) is calculated. Dl is an optimal value to be taken for the optical axis of the headlight 5. Dr is the difference between the average value in a range of angle change of the automobile body and an optimal value of the automobile body angle. If the Dr is outside a predetermined range (Dr < D2, D3 < Dr), the optical axis angle of the headlight relative to a horizontal line passing through a light source is adjusted such that Dl equals Da. If the Dr is in a predetermined range (D2 < Dr < D3), the an angle of optical axis of the headlight is maintained as it is.

The operational advantages of the projection-type automobile light according to the preferred embodiment of the present invention will now be described. First, as shown in the step S1, the optical axis angle adjustment of a headlight relative to a horizontal line passing through a light source (i.e. the optical axis direction adjustment) is performed only when the driving speed is greater than a predetermined value V1. Therefore, the optical axis angle adjustment is performed after the automobile enters into a stable driving state. The automobile body angle, when it is motionless i.e. before the start of motion of the automobile, is not a factor in determining whether or not the optical axis angle adjustment of the headlight is performed. Accordingly, although an automobile is motionless on a slope, or although an automobile is motionless in a state where its front and/or back tire is on a curb, or although a heavy weight is applied on the backside of the automobile, an appropriate optical axis angle of the headlight while driving is achieved by adjusting the optical axis angle of the headlight after the automobile enters into a stable driving state.

Secondly, as shown in step S2, optical axis angle adjustment of a headlight relative to a horizontal line passing through a light source is performed only when the driving speed is changing in a predetermined range for a predetermined time period. Therefore, it should be emphasized that the optical axis angle adjustment is performed after the automobile enters into a stable driving state. The optical-axis angle adjustment is not performed in accordance with acceleration, deceleration, or temporary change of road conditions. Accordingly, it is prevented to use unnecessary electric power, which is the driving force of the optical axis adjustment, or exhaustively overuse respective components of the optical axis angle adjustment device.

## Claims

1. An optical axis angle adjustment mechanism relative to a horizontal line passing through a light source for an automobile headlight comprising:
a speed detector for detecting the driving speed of the automobile;
an automobile body angle detector for detecting the automobile body angle or inclination, and for detecting its magnitude relative to a horizontal line in a front-back direction; and
a driving unit for performing the optical axis direction adjustment of the automobile headlight based upon the results from the speed detector and the automobile body angle detector, **characterised in that** the optical axis angle of the headlight being changed in case the automobile body angle is outside a predetermined range for a predetermined time period, and, the optical axis angle of the headlight being not changed for a predetermined time period since the start of moving the automobile.

2. The optical axis angle adjustment mechanism according to claim 1, wherein the optical axis angle of the headlight remains as it is in case the driving speed of the automobile is equal to or less than a predetermined value.

3. The optical axis angle adjustment mechanism according to claim 1 or 2, wherein the optical axis angle of the headlight is changed in case the driving speed of the automobile changes in a predetermined range for a predetermined time period.

4. The optical axis angle adjustment mechanism according to any of the claims 1 to 3, comprising a control unit for performing arithmetic operations to determine the amount the optical axis needs to be moved, and the results of the arithmetic operations is input as a control signal to a driving unit, wherein the optical axis angle adjustment is performed by the driving unit after a predetermined time period based upon the input control signal.

## Patentansprüche

1. Verstellmechanismus für einen Winkel einer optischen Achse relativ zu einer horizontalen Linie, die durch eine Lichtquelle für einen Fahrzeugscheinwerfer läuft, aufweisend:
einen Geschwindigkeitsmesser zum Erfassen der Fahrgeschwindigkeit des Fahrzeugs;
einen Fahrzeugaufbauwinkelmesser zum Erfassen des Fahrzeugaufbauwinkels oder -neigung; und zum Erfassen seiner Größe relative zu einer horizontalen Linie in einer Richtung von vorne nach hinten; und
eine Antriebseinheit zum Durchführen der Richtungsverstellung der optischen Achse des Fahrzeugscheinwerfers auf der Grundlage der Ergebnisse vom Geschwindigkeitsmesser und vom Fahrzeugaufbauwinkelmesser,
**dadurch gekennzeichnet, dass**
der Winkel der optischen Achse des Scheinwerfers für den Fall geändert wird, dass der Fahrzeugaufbauwinkel sich ausserhalb eines vorbestimmten Bereichs für eine vorbestimmte Zeitdauer befindet und der Winkel der optischen Achse des Scheinwerfers für eine vorbestimmte Zeitdauer ab dem Anfahren des Fahrzeugs nicht geändert wird.

2. Verstellmechanismus für einen Winkel einer optischen Achse nach Anspruch 1, bei dem der Winkel der optischen Achse des Scheinwerfers für den Fall verbleibt, wie er ist, dass die Fahrgeschwindigkeit des Fahrzeugs gleich oder kleiner als ein vorbestimmter Wert ist.

3. Verstellmechanismus für einen Winkel einer optischen Achse nach Anspruch 1 oder 2, bei dem der Winkel der optischen Achse des Scheinwerfers für den Fall verändert wird, dass sich die Fahrgeschwindigkeit des Fahrzeugs in einem vorbestimmten Bereich für eine vorbestimmte Zeitdauer ändert.

4. Verstellmechanismus für einen Winkel einer optischen Achse nach einem der Ansprüche 1 bis 3, aufweisend eine Steuereinheit zum Durchführen arithmetischer Operationen, um die Größe zu bestimmen, um welche die optische Achse bewegt werden muss, und die Ergebnisse der arithmetischen Operationen werden als ein Steuersignal in eine Antriebseinheit eingegeben, wobei die Verstellung des Winkels der optischen Achse durch die Antriebseinheit nach einer vorbestimmten Zeitdauer durchgeführt wird, die auf dem Eingangssteuersignal beruht.

## Revendications

1. Mécanisme de réglage angulaire d'axe optique par rapport à une ligne horizontale passant par une source lumineuse pour un phare d'automobile, comprenant :
un détecteur de vitesse pour détecter la vitesse de l'automobile ;
un détecteur d'angle du châssis automobile pour détecter l'angle ou l'inclinaison du châssis automobile et pour détecter son amplitude par rapport à une ligne horizontale dans une direction avant-arrière ; et
un module de commande pour réaliser le réglage de la direction de l'axe optique du phare automobile en fonction des résultats du détecteur de vitesse et du détecteur d'angle du châssis automobile,
**caractérisé en ce que** l'angle de l'axe optique du phare est modifié dans le cas où l'angle du châssis automobile est en dehors d'une plage prédéterminée pendant une durée prédéterminée, et l'angle de l'axe optique du phare n'est pas modifié pendant une durée prédéterminée partant du début du déplacement de l'automobile.

2. Mécanisme de réglage angulaire d'axe optique selon la revendication 1, dans lequel l'angle de l'axe optique du phare reste tel quel dans le cas où la vitesse de l'automobile est inférieure ou égale à une valeur prédéterminée.

3. Mécanisme de réglage angulaire d'axe optique selon la revendication 1 ou 2, dans lequel l'angle de l'axe optique du phare est modifié dans le cas où la vitesse de l'automobile change à l'intérieur d'une plage prédéterminée pendant une durée prédéterminée.

4. Mécanisme de réglage angulaire d'axe optique selon l'une quelconque des revendications 1 à 3, comprenant un module de commande pour réaliser des opérations arithmétiques pour déterminer la quantité dont l'axe optique doit être déplacé, et le résultat des opérations arithmétiques est envoyé comme signal de commande à un module de commande, le réglage de l'angle de l'axe optique étant réalisé par le module de commande après une durée prédéterminée en fonction du signal de commande d'entrée.
